# EUROPÄISCHE PATENTSCHRIFT

(11) **EP 3 302 833 B1**
(45) Veröffentlichungstag und Bekanntmachung des Hinweises auf die Patenterteilung: **21.06.2023**
(21) Anmeldenummer: 16726519.8
(22) Anmeldetag: 26.05.2016
(51) Int. Cl.: B08B 7/00, B24C 1/00, B24C 3/32, B24C 5/08, B24C 7/00, F01D 25/00

(54) **VERFAHREN UND VORRICHTUNG ZUR REINIGUNG EINES STRAHLTRIEBWERKS**
METHOD AND DEVICE FOR CLEANING A JET ENGINE
PROCÉDÉ ET DISPOSITIF POUR LE NETTOYAGE D'UN MOTEUR À RÉACTION

(30) Priorität: 29.05.2015 DE 102015209994
(43) Veröffentlichungstag der Anmeldung: 11.04.2018
(60) Teilanmeldung: 23150555.3
(73) Patentinhaber: Lufthansa Technik AG, 22335 Hamburg (DE)
(72) Erfinder: GILJOHANN, Sebastian, 65187 Wiesbaden (DE); APPEL, Holger Stefan, 63075 Offenbach (DE); DEJA, Dirk, 64569 Nauheim (DE)
(74) Vertreter: Glawe, Delfs, Moll
(86) Internationale Anmeldenummer: PCT/EP2016/061890
(87) Internationale Veröffentlichungsnummer: WO 2016/193112

(56) Entgegenhaltungen:
- EP-A1- 0 370 762
- WO-A1-2008/113497
- WO-A1-2009/132847
- WO-A1-2012/123098
- DE-A1- 10 163 852
- DE-B3- 10 243 693
- US-A- 3 033 711
- US-A1- 2003 207 655

## Beschreibung

Die Erfindung betrifft ein Verfahren und eine Vorrichtung zum Reinigen eines Flugzeugstrahltriebwerks mit einem Reinigungsmedium, das Feststoffe enthält, die mit wenigstens einer Ausbringeinrichtung in das Triebwerk eingebracht werden.

Flugzeugstrahltriebwerke besitzen eine oder mehrere Kompressorstufen, eine Brennkammer, sowie eine oder mehrere Turbinenstufen. In den Turbinenstufen geben die aus der Brennkammer stammenden heißen Verbrennungsgase einen Teil ihrer thermischen und mechanischen Energie ab, die zum Antrieb der Kompressorstufen genutzt wird. Strahltriebwerke von kommerziellen Verkehrsflugzeugen weisen heute überwiegend einen sogenannten Turbofan auf, der stromaufwärts von den Kompressorstufen angeordnet ist und in der Regel einen erheblich größeren Durchmesser als die Kompressorstufen aufweist. Der Turbofan wird ebenfalls durch die Turbinenstufen angetrieben und lässt einen erheblichen Teil der das Triebwerk insgesamt durchströmenden Luft als sogenannten Nebenluftstrom an den Kompressorstufen, der Brennkammer und den Turbinenstufen vorbeiströmen. Durch einen solchen Nebenstrom kann der Wirkungsgrad eines Triebwerks erheblich gesteigert und außerdem noch für eine verbesserte Geräuschdämmung des Triebwerks gesorgt werden.

Eine Verschmutzung eines Flugzeugstrahltriebwerks kann zu einer Reduktion des Wirkungsgrades führen, was einen erhöhten Kraftstoffverbrauch und damit eine erhöhte Umweltbelastung zur Folge hat. Die Verschmutzung kann beispielsweise durch Insekten, Staub, Salznebel oder sonstigen Umweltverunreinigungen hervorgerufen werden. Teile des Triebwerks können durch Verbrennungsrückstände der Brennkammer kontaminiert werden. Diese Verunreinigungen bilden einen Belag auf den mit Luft durchströmten Teilen eines Flugzeugtriebwerks und beeinträchtigen die Oberflächengüte. Damit wird der thermodynamische Wirkungsgrad des Triebwerks beeinträchtigt. Hierbei sind insbesondere die Schaufeln in den Kompressorstufen zu nennen, deren Verschmutzung einen erheblichen Einfluss auf den Wirkungsgrad des gesamten Triebwerks hat.

Zur Beseitigung von Verunreinigungen ist bekannt, ein Triebwerk mit einer Reinigungsflüssigkeit, in der Regel heißes Wasser, zu reinigen. Aus der WO 2005/120953 ist eine Anordnung bekannt, bei der eine Mehrzahl von Reinigungsdüsen stromaufwärts des Turbofans bzw. der Kompressorstufen angeordnet werden. Die Reinigungsflüssigkeit wird dann in das Triebwerk gesprüht. Das Triebwerk kann sich dabei im sogenannten Dry-Cranking, d.h. die Schaufeln des Triebwerks rotieren, ohne dass in der Brennkammer Kerosin verbrannt wird, drehen. Durch die in das Triebwerk eingebrachte Reinigungsflüssigkeit sollen Verschmutzungen von den Oberflächen der Triebwerkskomponenten abgewaschen werden.

Alternativ zur Verwendung von Wasser als Reinigungsmedium ist die Verwendung von Kohlenstaub bekannt. Der Kohlenstaub wird dabei wie das Wasser durch Düsen in das Triebwerk eingebracht und trägt Verunreinigungen von Oberflächen aufgrund von abrasiven Effekten ab. Allerdings wird durch den Kohlenstaub auch die Oberfläche der Triebwerksteile angegriffen, weshalb ein Reinigungsmedium wie Kohlenstaub sich nicht für die regelmäßige Reinigung von Flugzeugtriebwerken eignet. Außerdem bleiben beim Reinigen mit Kohlenstaub ungewünschte Reste des Reinigungsmaterials im Triebwerk zurück.

WO 2009/132847 A1 offenbart eine Vorrichtung und ein Verfahren zum Reinigen von Strahltriebwerken unter Verwendung von festem Kohlendioxid als Reinigungsmedium, welches mit wenigstens einer Ausbringeinrichtung in das Triebwerk eingebracht wird.

Das Dokument US 3,033,711 offenbart eine Vorrichtung, mit deren Hilfe zerkleinerte Walnussschalenstückchen unter Ausnutzung des Venturi-Effektes in ein Strahltriebwerk eingesogen werden, um dieses zu reinigen.

Der Erfindung liegt die Aufgabe zugrunde, ein Verfahren sowie eine Vorrichtung zu schaffen, das bzw. die eine verbesserte Reinigung von Flugzeugtriebwerken ermöglicht.

Diese Aufgabe wird gelöst durch ein Verfahren bzw. eine Vorrichtung gemäß den unabhängigen Ansprüchen. Vorteilhafte Weiterbildungen ergeben sich aus den abhängigen Ansprüchen.

Die Erfindung betrifft somit ein Verfahren zum Reinigen eines Strahltriebwerks mit einem Reinigungsmedium, das Feststoffe enthält. Die Feststoffe werden mittels wenigstens einer Ausbringeinrichtung in das Triebwerk eingebracht. Bei den Feststoffen kann es sich um bei der Anwendungstemperatur stabile Feststoffe wie beispielsweise Kunststoffperlen, Glasperlen, Sand oder Kohlenstaub handeln. Bevorzugt werden jedoch thermolabile Feststoffe wie beispielsweise festes Kohlendioxid und/oder Eis (Wassereis) verwendet. Gemäß der Erfindung umfassen die Feststoffe Wassereis, das in Form von Pellets oder in sonstiger Form zerkleinert vorliegt und verwendet wird.

Im Rahmen der Erfindung können eine oder mehrere Ausbringeinrichtungen verwendet werden, nachfolgend wird immer die Einzahl verwendet und soll die Verwendung einer Mehrzahl mit umfassen.

Erfindungsgemäß ist vorgesehen, dass das Reinigungsmedium aus der Ausbringeinrichtung mit einer Austrittsgeschwindigkeit von 5 bis 50 m/s austritt.

Kern der Erfindung ist es, dass das Reinigungsmedium aus einer Ausbringeinrichtung (bevorzugt mit Unterdruck oder allenfalls unter einem geringen Überdruck von maximal 1 bar) im Bereich des Triebwerkseinlasses freigesetzt wird und so mit einem allenfalls geringen Grundimpuls mit einer maximalen Geschwindigkeit von 5 bis 50m/s in den Luftstrom vor dem Triebwerk abgegeben und durch diesen Luftstrom durch das Triebwerk hindurch gefördert wird.

Eine Ausbringeinrichtung im Sinne der Erfindung ist jede Einrichtung, die das gewünschte Freisetzen unter den genannten Bedingungen (bevorzugt Unterdruck oder allenfalls mit geringem Überdruck) ermöglicht. Eine Ausbringeinrichtung kann beispielsweise eine Öffnung aufweisen, deren Querschnitt gegenüber dem Querschnitt des zuführenden Schlauch- oder Rohrsystems erweitert, nicht verengt oder leicht verengt ist. Leicht verengt im Sinne der Erfindung ist eine Verringerung des Durchmessers der Öffnung um 50 % oder weniger. Bevorzugt soll damit vermieden werden, dass durch eine zu große Verengung im Bereich der Austrittsöffnung der Ausbringeinrichtung eine zu hohe Strömungsgeschwindigkeit und damit ein unerwünscht hoher Impuls des austretenden Reinigungsmediums entsteht.

Eine Ausbringeinrichtung kann erfindungsgemäß eine oder mehrere Austrittsöffnungen aufweisen, die entweder statisch oder mitdrehend vor dem Einlass des Triebwerks angeordnet sein können.

Die Erfindung hat erkannt, dass durch die beanspruchten Verfahrensparameter eine wirksame Reinigung insbesondere des Kompressors oder Verdichters eines Triebwerks möglich ist. Erfindungsgemäß folgt das Reinigungsmedium der Strömung im Verdichter und erzielt einen Reinigungseffekt in sämtlichen Stufen des Verdichters, insbesondere auch in den hintersten Stufen. Erfindungsgemäß wird insbesondere erreicht, dass thermolabile Feststoffe wie insbesondere Kohlendioxid oder Eis nicht bereits in den vorderen Stufen des Verdichters sämtliche kinetische Energie abgeben und/oder aufgrund einer zu hohen kinetischen Energie beim Aufprall auf Bauteile zerplatzen/zerkleinert werden, sublimieren oder schmelzen. Stattdessen wird durch die erfindungsgemäßen Parameter den Feststoffen lediglich ein Grundimpuls mitgegeben, der sie in das Triebwerk fördert. Die Relativgeschwindigkeit zu der durch das Triebwerk strömenden Luftströmung ist erfindungsgemäß bevorzugt gering. Dadurch entstehen längere Kontaktzeiten mit den Triebwerksbauteilen, insbesondere Verdichterbauteilen, die einen besseren Reinigungseffekt bewirken. Der Feststoff wird vom Gasstrom im Triebwerk mitgenommen und so auch in die hintersten Verdichterstufen gefördert.

Die Kombination dieser erfindungsgemäßen Verfahrensparameter erlaubt eine wirkungsvolle Reinigung des Verdichters (Core Engine) von Strahltriebwerken über deren gesamte Länge, insbesondere auch in den in Strömungsrichtung hinteren Stufen.

Ein bevorzugter Bereich der Austrittsgeschwindigkeit ist 10-30 m/s.

In einer möglichen Variante der Erfindung wird das Reinigungsmedium (der Feststoff) zu der Ausbringeinrichtung mechanisch gefördert. Mechanische Förderung bedeutet einen unmittelbaren Kontakt mit geeigneten mechanischen Fördereinrichtungen, beispielhaft genannt seien Schneckenförderer oder Spiralförderer.

Bevorzugt kann das Reinigungsmedium zu der Ausbringeinrichtung pneumatisch gefördert werden. Eine pneumatische Förderung beinhaltet die Verwendung eines Trägergases, vorzugsweise Luft, beispielsweise die Verwendung eines Gebläses. Bei einer pneumatischen Förderung wird mit einem gegenüber dem Umgebungsdruck allenfalls geringfügig erhöhten Druck von weniger als 1 bar bzw. Unterdruck gearbeitet. Dadurch soll vermieden werden, dass das Reinigungsmedium aus der Ausbringeinrichtung mit einem zu hohen Impuls bzw. mit einer zu hohen Geschwindigkeit austritt, die deutlich über der Strömungsgeschwindigkeit der in den Einlass des Triebwerks einströmenden Luft liegt. Die Relativgeschwindigkeit des Reinigungsmediums gegenüber diesem Luftstrom im Triebwerkseinlass soll also möglichst gering oder Null sein. Bevorzugte absolute Bereiche des Drucks sind 0,5-2 bar, weiter vorzugsweise 0,7-2 bar, weiter vorzugweise 0,9-2 bar.

Um die gewünschte Mitnahme der Feststoffe durch den Luftstrom im Verdichter zu ermöglichen, ohne dass die Feststoffe vorzeitig gegen die innere oder äußere Verdichterwand stoßen, sollte die Austrittsrichtung der Ausbringeinrichtung (im Rahmen der Erfindung bezeichnet dieser Begriff die Hauptaustrittsrichtung) möglichst weit in den Verdichter hineinreichen, ohne dass diese Austrittsrichtung bzw. ihre gedachte Achse die Wände des Verdichters berührt. Zu diesem Zweck ist erfindungsgemäß vorgesehen, dass die Austrittsöffnung der Fördereinheit in einem Radialabstand von der Rotationsachse des Triebwerks angeordnet wird, der dem 0,5 bis 1,2fachen, vorzugsweise dem 0,6 bis 1fachen des Radius der stromauf gerichteten Eintrittsöffnung der ersten Kompressorstufe entspricht. Der Austritt liegt somit in Radialrichtung näher an der äußeren Verdichterwand als an der Rotationsachse des Triebwerks bzw. Verdichters.

Bevorzugt ist die Hauptaustrittsrichtung der Ausbringeinrichtung waagerecht (parallel zur Rotationsachse des Triebwerks) in den Triebwerkseinlauf gerichtet. Alternativ kann die Austrittsrichtung einen Winkel mit der Rotationsachse des Triebwerks einschließen, der im Wesentlichen dem Anstellwinkel der Fanblades des Triebwerks entspricht. Dies erleichtert den Durchtritt des Reinigungsmediums durch den Fan und den Eintritt in die dahinter angeordnete Core Engine.

Erfindungsgemäß können die Feststoffpartikel (beispielsweise Pellets) unterschiedliche Größen aufweisen. Dabei kann es sich entweder um eine breite Größenverteilung handeln oder aber um eine Größenverteilung mit zwei oder mehr unterschiedlichen Maxima, die beispielsweise erhalten werden können durch Zusammenmischen von zwei oder mehr Chargen von Partikeln unterschiedlicher Größe bzw. Größenverteilung. Es können einer oder mehrere Vorratsbehälter mit Feststoffpartikeln unterschiedlicher Größe zum Einsatz kommen, alternativ kann im Ablauf des erfindungsgemäßen Verfahrens eine Zerkleinerung wenigstens eines Teils der Feststoffpartikel vor dem Austritt aus der Ausbringeinrichtung erfolgen.

Die Feststoffe umfassen erfindungsgemäß Wassereis. Das Wassereis wird erfindungsgemäß in Form von Pellets oder in sonstiger Form zerkleinert verwendet. Ebenfalls möglich ist die Verwendung von Wassereis als zerkleinertes Eis (sog. crushed ice).

Pellets können in einem sog. Pelletiser aus flüssigem CO₂ hergestellt werden und sind gut lagerungsfähig. Es kann vorgesehen sein, dass eine Versorgungseinrichtung bereits vorgefertigte Pellets zur Ausbringeinrichtung befördert. Es ist aber auch möglich, dass die Versorgungseinrichtung eine Vorrichtung aufweist, um aus flüssigem Kohlendioxid feste Kohlendioxidpellets bzw. festen Kohlendioxidschnee herzustellen, und diese zur Ausbringeinrichtung befördert. In beiden Fällen tritt das feste Kohlendioxid aus und gelangt in das zu reinigende Triebwerk.

In dem Dokument "Carbon Dioxide Blasting Operations" der US-Streitkräfte ist die Technik zur Herstellung von CO₂ - Pellets beschrieben. Pellets werden bspw. durch eine Verdichtung von festem CO₂ (bspw. Flocken) in einem Pelletiser oder dergleichen gewonnen. Die Herstellung von Eispellets (Wassereis) ist dem Fachmann geläufig und bedarf hier keiner näheren Erläuterung. Die Verwendung von CO₂-Pellets mit der erfindungsgemäß vorgesehenen geringen Austrittsgeschwindigkeit ermöglicht trotz deren Flüchtigkeit einen Durchtritt und einen guten Reinigungseffekt über die gesamte axiale Länge der Core Engine.

In einer Variante des erfindungsgemäßen Verfahrens kann das Reinigungsmedium festes Kohlendioxid und Wassereis im Massenverhältnis 5:1 bis 1:5, vorzugsweise 1:2 bis 2:1 aufweisen. Die Vorteile beider Reinigungsmedien werden so kombiniert. Grundsätzlich ist es zwar bereits bekannt (WO 2012/123098 A1), eine Mischung von Pellets aus Kohlendioxid und Eis als festes Strahlmittel zur Reinigung von Oberflächen vorzusehen. Es hat sich jedoch gezeigt, dass diese Mischung in besonders vorteilhafter Weise zur Reinigung von Strahltriebwerken eingesetzt werden kann, da der größere Teil des festen Kohlendioxid bereits im vorderen Bereich des Kompressors sublimiert und diesen zum einen durch die kinetische Energie der Kollision und durch thermische Effekte reinigt. Aufgrund der durch das Kohlendioxid induzierten Wärme-Kälte-Spannung werden Verunreinigungen von den Oberflächen der Triebwerksteile abgelöst. Das erfindungsgemäß in der Mischung zugesetzte Eis weist eine höhere Härte und längere Haltbarkeit auf als festes Kohlendioxid. Dadurch verbessert es zum einen den mechanischen Reinigungseffekt durch die kinetische Energie des Aufpralls und ist besser in der Lage, den Kompressor insgesamt bis zu den hinteren Stufen zu durchdringen und auch dort noch eine Reinigungswirkung zu entfalten. Die erfindungsgemäß eingesetzte Mischung bewirkt zum einen eine weitgehend vollständige und gleichmäßige Reinigung aller Stufen des Kompressors und trägt zum anderen nur vergleichsweise geringe Mengen Wasser in das Triebwerk ein. Dieses eingetragene Wasser wird durch den beim Dry-Cranking durch das Triebwerk strömenden Luftstrom größtenteils aus dem Triebwerk abtransportiert.

Die mittlere Größe der verwendeten Pellets liegt bevorzugt im Bereich 0,5 bis 10 mm, bevorzugt kann sie etwa 1,5 bis 6 mm betragen. Wenn längliche Pellets verwendet werden, kann deren Länge beispielsweise 2 bis 6 mm betragen, die Abmessung quer zur Längserstreckung beispielsweise etwa 3 mm. Eine mögliche Ausführungsform zur Erreichung unterschiedlicher Pelletgrößen während der Reinigung ist die Verwendung eines Scramblers, durch den die Pellets während der Förderung verkleinert werden. Eine weitere Ausführungsform kann die direkte Zugabe verschiedener Pelletgrößen in den Vorratsbehälter sein.

Bevorzugt werden die Feststoffe mit einem Massenstrom von 500 bis 2500 kg/h, weiter vorzugsweise 1000 bis 2500 kg/h, weiter vorzugsweise 1200 bis 2000 kg/h, weiter vorzugsweise 1500 bis 2000 kg/h eingebracht.

Die Dauer des Reinigungsvorgangs (reine Strahlzeit ohne Pausen) beträgt bevorzugt 1 bis 15 min, weiter vorzugsweise 2 bis 10 min, weiter vorzugsweise 4 bis 7 min.

Während eines Reinigungsvorgangs kann beispielsweise 10 bis 600 kg, vorzugsweise 35 bis 400 kg, weiter vorzugsweise 40 bis 250 kg Feststoff in das Triebwerk eingebracht werden.

Das Dry-Cranking bzw. Rotierenlassen des Strahltriebwerks während des Reinigungsvorgangs erfolgt bevorzugt mit einer Fan-Drehzahl von 50 bis 500 min⁻¹, vorzugsweise 100 bis 300 min⁻¹, weiter vorzugsweise 120 bis 250 min⁻¹. Besonders bevorzugt ist eine Fan-Drehzahl zwischen 150 und 250 min⁻¹. Das Reinigen kann auch im Leerlaufbetrieb des Triebwerks stattfinden. Die Drehzahl beträgt dann bevorzugt 500 bis 1500 min⁻¹.

Ein weiterer Gegenstand der Erfindung ist eine Vorrichtung, die zur Durchführung des erfindungsgemäßen Verfahrens ausgebildet ist. Sie weist folgende Merkmale auf:
a) eine Einrichtung zur Erzeugung eines Gasstroms,
b) eine Mischeinrichtung zum Einbringen von Feststoff in den Gasstrom,
c) eine Ausbringeinrichtung für das Reinigungsmedium.

Erfindungsgemäß ist vorgesehen, dass die Vorrichtung zum Ausbringen von Reinigungsmedium aus der Ausbringeinrichtung mit einer Austrittsgeschwindigkeit von 5-50 m/s ausgebildet ist, wobei die Feststoffe Wassereis umfassen, das in Form von Pellets oder in sonstiger Form zerkleinert vorliegt und verwendet wird. Es handelt sich somit erfindungsgemäß nicht um eine übliche Strahleinrichtung, bei der das Medium mit einer hohen Austrittsgeschwindigkeit aus einer Düse abgegeben wird.

Die Mischeinrichtung kann in einem Bereich erhöhter Gasstromgeschwindigkeit angeordnet sein, dieser Bereich erhöhter Geschwindigkeit kann beispielsweise durch den Venturi-Effekt bewirkt werden.

Zu diesem Zweck kann stromauf der Mischeinrichtung eine Düse angeordnet sein, die die Strömungsgeschwindigkeit im Bereich der Mischeinrichtung erhöht.

Stromab der Mischeinrichtung kann ein Diffusor angeordnet sein, durch den die Strömungsgeschwindigkeit verringert wird.

Die erfindungsgemäße Vorrichtung kann wenigstens eine Zufuhreinrichtung zum Zuführen unterschiedlicher Feststoffe zu der Mischeinrichtung aufweisen. Es kann dann wenigstens ein Vorratsbehälter vorhanden sein, alternativ kann ein Teilstrom aus einem Vorratsbehälter in einer Zerkleinerungseinrichtung zerkleinert werden. Zwei oder mehr Zufuhreinrichungen und/oder Vorratsbehälter können ebenfalls vorhanden sein.

Ein Teilstrom oder der Gesamtstrom der Feststoffpartikel können einem in der erfindungsgemäßen Vorrichtung angeordnetem zerkleinern zugeführt werden, der beispielsweise als Scrambler (beispielsweise für Trockeneis) ausgebildet sein kann. Scrambler sind dem Fachmann geläufig und beispielsweise in WO 2008/113497 A1 beschrieben.

Ein Ausführungsbeispiel der Erfindung wird im Folgenden anhand der Zeichnungen erläutert. Darin zeigen:
- Fig. 1: schematisch eine erfindungsgemäße Reinigungsvorrichtung;

- Fig. 2: den Druckverlauf innerhalb der erfindungsgemäßen Vorrichtung.

Die Vorrichtung weist ein Gebläse 1 auf, das beispielsweise als Nebenstromverdichter ausgebildet sein kann.

Die Luft strömt durch ein Rohr 2 zu einer Düse 3, die den Luftstrom in ein T-Stück 4 entspannt und dabei die Strömungsgeschwindigkeit erhöht. In das T-Stück 4 mündet ein Zufuhrrohr 5, das Trockeneispellets aus einem schematisch dargestellten Vorratsbehälter 6 zuführt. Durch den verminderten Druck im T-Stück 4 werden die Pellets in den Gasstrom angesaugt und eingemischt. Das T-Stück dient somit als Mischeinrichtung.

Stromab des T-Stücks 4 ist ein Diffusor 7 angeordnet, der die Geschwindigkeit des Gasstroms und der davon mitgenommenen Pellets wieder verringert.

Der Gasstrom mit den Pellets wird durch ein Rohr 8 einem (fakultativ vorhandenen) Scrambler 9 zugeführt, in dem eine Teilzerkleinerung zur Erzielung unterschiedlicher Pelletsgrößen erfolgt. Der Scrambler kann alternativ auch zwischen Voratsbehälter und T-Stück angeordnet sein. Durch ein Rohr 10 wird das Reinigungsmedium aus Gasstrom und Pellets der Ausbringeinrichtung 11 zugeführt, die vor dem Triebwerkseinlass angeordnet ist. Es tritt daraus im Wesentlichen parallel zur Rotationsachse des Triebwerks aus und wird vom Gasstrom in das Triebwerk mitgenommen, um dort die gewünschte Reinigungswirkung zu entfalten. Die Ausbringeinrichtung 11 kann beispielsweise einen kreisförmigen oder vieleckigen Querschnitt der Austrittsöffnung aufweisen.

Die erfindungsgemäße Vorrichtung kann stationär vor dem Einlass eines Triebwerks angeordnet sein. Ebenso ist es möglich, eine Mehrzahl von Reinigungsvorrichtungen vor einem Triebwerk anzuordnen, um beispielsweise unterschiedliche oder unterschiedlich große Feststoffpartikel im Bereich des Triebwerkseinlasses zu mischen.

Alternativ ist es möglich, beispielsweise mittels einer Schlauchverbindung die Austrittsöffnung mitrotierend vor dem Triebwerk anzuordnen.

Das Gebläse 1 ist im gezeigten Beispiel stromauf der Mischeinrichtung 4 angeordnet, kann aber alternativ stromab davon, bspw. hinter dem Diffusor 7, angeordnet sein.

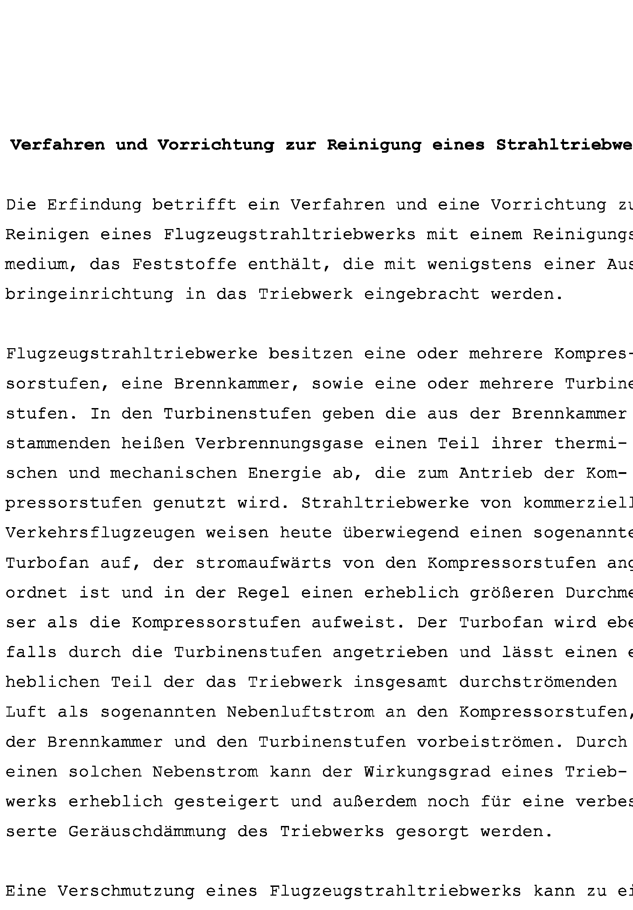

Figur 2 zeigt den Druckverlauf (gemessen in kPa) in der erfindungsgemäßen Vorrichtung. Der Nullpunkt der Druckskala entspricht dem Umgebungsdruck (Atmosphärendruck).

In der beispielhaft gezeigten Ausführungsform erzeugt das Gebläse 1 zunächst einen Überdruck , der in der Düse 3 und dem T-Stück 4 bis auf einen leichten Unterdruck abfällt, um das Einsaugen von Pellets zu erleichtern. Im Diffusor 7 erfolgt dann wieder eine Erhöhung des Drucks, entsprechend sinkt die Strömungsgeschwindigkeit der Pellets auf einen erfindungsgemäßen Wert von 5-50 m/s. Im Bereich der Austrittsöffnung der Ausbringeinrichtung 11 fällt der Druck dann bis auf den Umgebungsdruck ab.

## Patentansprüche

1. Verfahren zum Reinigen eines Strahltriebwerks mit einem Reinigungsmedium, das Feststoffe enthält, die mit wenigstens einer Ausbringeinrichtung (11) in das Triebwerk eingebracht werden, **dadurch gekennzeichnet, dass** das Reinigungsmedium aus der Ausbringeinrichtung (11) mit einer Austrittsgeschwindigkeit von 5-50 m/s austritt, wobei die Feststoffe Wassereis umfassen, das in Form von Pellets oder in sonstiger Form zerkleinert vorliegt und verwendet wird.

2. Verfahren nach Anspruch 1, **dadurch gekennzeichnet, dass** die Austrittsgeschwindigkeit 10-30 m/s beträgt.

3. Verfahren nach Anspruch 1 oder 2, **dadurch gekennzeichnet, dass** das Reinigungsmedium mechanisch und/oder mit einem Trägergas unter einem Druck von 0,5 bar bis 2 bar, vorzugsweise 0,7 bis 2 bar, weiter vorzugsweise 0,9 bis 2 bar gefördert wird.

4. Verfahren nach Anspruch 3, **dadurch gekennzeichnet, dass** das Reinigungsmedium zu der Ausbringeinrichtung (11) pneumatisch gefördert wird und / oder dass das Reinigungsmedium zu der Ausbringeinrichtung (11) mit Hilfe einer Fördereinrichtung mechanisch gefördert wird, wobei die Fördereinrichtung einen Schneckenförderer oder Spiralförderer umfasst.

5. Verfahren nach einem der Ansprüche 1-4, **dadurch gekennzeichnet, dass** es eines, eine Unterkombination oder alle der nachfolgenden drei Merkmale aufweist:
- der Austritt der wenigstens einen Ausbringeinrichtung (11) ist in einem Radialabstand von der Rotationsachse des Triebwerks angeordnet, der dem 0,5 bis 1,2fachen, vorzugsweise dem 0,6 bis 1fachen des Radius der stromauf gerichteten Eintrittsöffnung einer ersten Kompressorstufe entspricht;
- die Hauptaustrittsrichtung der Ausbringeinrichtung (11) schließt mit der Rotationsachse des Triebwerks einen Winkel ein, der im Wesentlichen dem Anstellwinkel der Fanblades des Triebwerks entspricht;
- die Feststoffpartikel weisen unterschiedliche Größen auf.

6. Verfahren nach Anspruch 1, **dadurch gekennzeichnet, dass** das Reinigungsmedium festes Kohlendioxid und Wassereis im Massenverhältnis 5:1 bis 1:5, vorzugsweise 1:2 bis 2:1 aufweist.

7. Verfahren nach einem der Ansprüche 1 oder 6, **dadurch gekennzeichnet, dass** das feste Kohlendioxid und/oder das Wassereis eine Pelletgröße von 0,5 bis 10 mm, vorzugsweise 1,5 bis 6 mm, aufweist.

8. Verfahren nach einem der Ansprüche 1 bis 7, **dadurch gekennzeichnet, dass** die Feststoffe mit einem Massenstrom von 500 bis 2500 kg/h, weiter vorzugsweise 1000 bis 2500 kg/h, weiter vorzugsweise 1200 bis 2000 kg/h, weiter vorzugsweise 1500 bis 2000 kg/h eingebracht werden.

9. Verfahren nach einem der Ansprüche 1 bis 8, **dadurch gekennzeichnet, dass** das Reinigen des Strahltriebwerks (50) über einen Zeitraum von 1 bis 15 min, vorzugsweise 2 bis 10 min, weiter vorzugsweise 4 bis 7 min durchgeführt wird.

10. Verfahren nach einem der Ansprüche 1 bis 9, **dadurch gekennzeichnet, dass** während eines Reinigungsvorgangs 10 bis 600 kg, vorzugsweise 35 bis 400 kg, weiter vorzugsweise 40 bis 250 kg Feststoff in das Triebwerk eingebracht werden.

11. Verfahren nach einem der Ansprüche 1 bis 10, **dadurch gekennzeichnet, dass** das Strahltriebwerk mit einer Fan-Drehzahl von 50 bis 500 min⁻¹, vorzugsweise 100 bis 300 min⁻¹, weiter vorzugsweise 120 bis 250 min⁻¹ rotieren gelassen wird.

12. Vorrichtung zur Durchführung des Verfahrens nach einem der Ansprüche 1-11, mit den Merkmalen:
a) eine Einrichtung (1) zur Erzeugung eines Gasstroms,
b) eine Mischeinrichtung (4) zum Einbringen von Feststoff in den Gasstrom,
c) eine Ausbringeinrichtung (11) für das Reinigungsmedium,
**dadurch gekennzeichnet, dass** die Vorrichtung zum Ausbringen von Reinigungsmedium aus der Ausbringeinrichtung mit einer Austrittsgeschwindigkeit von 5-50 m/s ausgebildet ist, wobei die Feststoffe Wassereis umfassen, das in Form von Pellets oder in sonstiger Form zerkleinert vorliegt und verwendet wird.

13. Vorrichtung nach Anspruch 12, **dadurch gekennzeichnet, dass** die Mischeinrichtung (4) in einem Bereich erhöhter Gasstromgeschwindigkeit angeordnet sein kann, wobei vorzugsweise stromauf der Mischeinrichtung (4) eine Düse (3) angeordnet ist, wobei weiter vorzugsweise stromab der Mischeinrichtung (4) ein Diffusor (7) angeordnet ist.

14. Vorrichtung nach einem der Ansprüche 12 oder 13, **dadurch gekennzeichnet, dass** sie wenigstens eine Zufuhreinrichtung zum Zuführen unterschiedlicher Feststoffe zu der Mischeinrichtung aufweist, wobei die Vorrichtung vorzugsweise eine Einrichtung (9) zum Zerkleinern von Feststoffpartikeln aufweist.

## Claims

1. Method for cleaning a jet engine with a cleaning medium which contains solids which are introduced into the engine by way of at least one ejecting device (11), **characterized in that** the cleaning medium exits from the ejecting device (11) at an outlet speed of 5-50 m/s, the solids comprising water ice which is present and used in the form of pellets or in a comminuted state in another form.

2. Method according to Claim 1, **characterized in that** the outlet speed is 10-30 m/s.

3. Method according to Claim 1 or 2, **characterized in that** the cleaning medium is conveyed mechanically and/or with a carrier gas at a pressure of from 0.5 bar to 2 bar, preferably of from 0.7 to 2 bar, further preferably of from 0.9 to 2 bar.

4. Method according to Claim 3, **characterized in that** the cleaning medium is conveyed pneumatically to the ejection device (11), and/or **in that** the cleaning medium is conveyed mechanically to the ejection device (11) with the aid of a conveying device, the delivery device comprising a worm conveyor or spiral conveyor.

5. Method according to one of Claims 1-4, **characterized in that** it has one, a sub-combination or all of the following three features:
- the outlet of the at least one ejection device (11) is arranged at a radial spacing from the rotational axis of the engine, which radial spacing corresponds to from 0.5 to 1.2 times, preferably from 0.6 to 1 times the radius of the inlet opening, directed upstream, of a first compressor stage;
- the main outlet direction of the ejection device (11) encloses an angle with the rotational axis of the engine, which angle corresponds substantially to the angle of attack of the fan blade of the engine;
- the solid particles have different sizes.

6. Method according to Claim 1, **characterized in that** the cleaning medium comprises solid carbon dioxide and water ice in the mass ratio of from 5:1 to 1:5, preferably of from 1:2 to 2:1.

7. Method according to either of Claims 1 or 6, **characterized in that** the solid carbon dioxide and/or the water ice have/has a pellet size of from 0.5 to 10 mm, preferably of from 1.5 to 6 mm.

8. Method according to one of Claims 1 to 7, **characterized in that** the solids are introduced with a mass flow of from 500 to 2500 kg/h, further preferably of from 1000 to 2500 kg/h, further preferably of from 1200 to 2000 kg/h, further preferably of from 1500 to 2000 kg/h.

9. Method according to one of Claims 1 to 8, **characterized in that** the cleaning of the jet engine (50) is carried out over a time period of from 1 to 15 minutes, preferably of from 2 to 10 minutes, further preferably of from 4 to 7 minutes.

10. Method according to one of Claims 1 to 9, **characterized in that** from 10 to 600 kg, preferably from 35 to 400 kg, further preferably from 40 to 250 kg of solid are introduced into the engine during a cleaning operation.

11. Method according to one of Claims 1 to 10, **characterized in that** the jet engine is allowed to rotate at a fan rotational speed of from 50 to 500 rpm, preferably of from 100 to 300 rpm, further preferably of from 120 to 250 rpm.

12. Apparatus for carrying out the method according to one of Claims 1-11, with the features:
a) a device (1) for producing a gas stream,
b) a mixing device (4) for introducing solid into the gas stream,
c) an ejection device (11) for the cleaning medium,
**characterized in that** the apparatus is configured to eject cleaning medium from the ejection device at an outlet speed of from 5-50 m/s, the solids comprising water ice which is present and used in the form of pellets or in a comminuted state in another form.

13. Apparatus according to Claim 12, **characterized in that** the mixing device (4) can be arranged in a region of increased gas stream speed, a nozzle (3) preferably being arranged upstream of the mixing device (4), a diffuser (7) further preferably being arranged downstream of the mixing device (4).

14. Apparatus according to either of Claims 12 or 13, **characterized in that** it has at least one feed device for feeding different solids to the mixing device, the apparatus preferably having a device (9) for comminuting solid particles.

## Revendications

1. Procédé pour le nettoyage d'un moteur à réaction à l'aide d'un milieu de nettoyage qui contient des matières solides qui sont introduites dans le moteur à l'aide d'au moins un dispositif de distribution (11), **caractérisé en ce que** le milieu de nettoyage sort du dispositif de distribution (11) à une vitesse de sortie de 5 à 50 m/s, les matières solides comprenant de la glace d'eau qui est présente et utilisée à l'état broyé sous forme de pastilles ou sous une autre forme.

2. Procédé selon la revendication 1, **caractérisé en ce que** la vitesse de sortie est de 10 à 30 m/s.

3. Procédé selon la revendication 1 ou 2, **caractérisé en ce que** le milieu de nettoyage est convoyé mécaniquement et/ou à l'aide d'un gaz porteur à une pression de 0,5 bar à 2 bars, de préférence de 0,7 à 2 bars, plus préférablement de 0,9 à 2 bars.

4. Procédé selon la revendication 3, **caractérisé en ce que** le milieu de nettoyage est convoyé de manière pneumatique jusqu'au dispositif de distribution (11) et/ou le milieu de nettoyage est convoyé de manière mécanique jusqu'au dispositif de distribution (11) à l'aide d'un dispositif de convoyage, le dispositif de convoyage comprenant un convoyeur à vis sans fin ou un convoyeur à spirale.

5. Procédé selon l'une des revendications 1 à 4, **caractérisé en ce qu'**il présente une des trois caractéristiques suivantes, une sous-combinaison de celles-ci ou toutes les trois caractéristiques suivantes
- la sortie de l'au moins un dispositif de distribution (11) est disposée à une distance radiale de l'axe de rotation du moteur, laquelle correspond à 0,5 à 1,2 fois, de préférence à 0,6 à 1 fois le rayon de l'ouverture d'entrée, orientée vers l'amont, d'un premier étage de compresseur ;
- la direction de sortie principale du dispositif de distribution (11) forme avec l'axe de rotation du moteur un angle qui correspond essentiellement à l'angle d'attaque des aubes de soufflante du moteur ;
- les particules solides présentent des tailles différentes.

6. Procédé selon la revendication 1, **caractérisé en ce que** le milieu de nettoyage présente du dioxyde de carbone solide et de la glace d'eau dans un rapport massique de 5:1 à 1:5, de préférence de 1:2 à 2:1.

7. Procédé selon l'une des revendications 1 ou 6, **caractérisé en ce que** le dioxyde de carbone solide et/ou la glace d'eau présente(nt) une taille de particules de 0,5 à 10 mm, de préférence de 1,5 à 6 mm.

8. Procédé selon l'une des revendications 1 à 7, **caractérisé en ce que** les matières solides sont introduites à un débit massique de 500 à 2500 kg/h, plus préférablement de 1000 à 2500 kg/h, plus préférablement de 1200 à 2000 kg/h, plus préférablement de 1500 à 2000 kg/h.

9. Procédé selon l'une des revendications 1 à 8, **caractérisé en ce que** le nettoyage du moteur à réaction (50) est effectué sur une période de 1 à 15 min, de préférence de 2 à 10 min, plus préférablement de 4 à 7 min.

10. Procédé selon l'une des revendications 1 à 9, **caractérisé en ce que**, lors d'un processus de nettoyage, 10 à 600 kg, de préférence 35 à 400 kg, plus préférablement 40 à 250 kg de matières solides sont introduites dans le moteur.

11. Procédé selon l'une des revendications 1 à 10, **caractérisé en ce que** le moteur à réaction peut tourner à une vitesse de rotation de soufflante de 50 à 500 min⁻¹, de préférence de 100 à 300 min⁻¹, plus préférablement de 120 à 250 min⁻¹.

12. Appareil permettant de mettre en œuvre le procédé selon l'une des revendications 1 à 11, présentant les caractéristiques suivantes :
a) un dispositif (1) permettant de générer un flux de gaz,
b) un dispositif de mélange (4) permettant d'introduire des matières solides dans le flux de gaz,
c) un dispositif de distribution (11) pour le milieu de nettoyage,
**caractérisé en ce que** l'appareil permettant de distribuer un milieu de nettoyage à partir du dispositif de distribution est réalisé avec une vitesse de sortie de 5 à 50 m/s, les matières solides comprenant de la glace d'eau qui est présente et utilisée à l'état broyé sous forme de pastilles ou sous une autre forme.

13. Appareil selon la revendication 12, **caractérisé en ce que** le dispositif de mélange (4) peut être disposé dans une région de vitesse de flux de gaz accrue, une buse (3) étant disposée de préférence en amont du dispositif de mélange (4), un diffuseur (7) étant disposé plus préférablement en aval du dispositif de mélange (4).

14. Appareil selon l'une des revendications 12 ou 13, **caractérisé en ce qu'**il présente au moins un dispositif d'acheminement servant à l'acheminement de différentes matières solides jusqu'au dispositif de mélange, l'appareil présentant de préférence un dispositif (9) permettant de broyer des particules solides.
